# EUROPÄISCHE PATENTSCHRIFT

(11) **EP 0 513 943 B1**
(45) Veröffentlichungstag und Bekanntmachung des Hinweises auf die Patenterteilung: **02.07.1997**
(21) Anmeldenummer: 92250079.8
(22) Anmeldetag: 07.04.1992
(51) Int. Cl.: A61C 8/00

(54) **Implantat mit Pressfläche**
Implant with pressure surface
Implant avec surface de pression

(30) Priorität: 13.05.1991 DE 4115959
(43) Veröffentlichungstag der Anmeldung: 19.11.1992
(73) Patentinhaber: ALTATEC Medizintechnische Elemente GmbH & Co. KG., 75449 Wurmberg (DE); IMZ-Fertigungs- und Vertriebsgesellschaft für dentale Technologie mbH, 70794 Filderstadt (DE)
(72) Erfinder: Dürr, Walter, W-7537 Remchingen (DE); Kirsch, Axel, Dr., W-7024 Filderstadt (DE)
(74) Vertreter: Goddar, Heinz J., Dr.

(56) Entgegenhaltungen:
- EP-A- 0 231 400
- EP-A- 0 282 789
- DE-A- 4 012 731
- DE-U- 8 905 497
- FR-A- 2 589 350
- LU-A- 59 918

## Beschreibung

Die Erfindung betrifft ein Implantat mit einem in Knochenmaterial implantierbaren Grundkörper, der ein Innengewinde zur Aufnahme eines Implantatpfostens, einer Implantatextension, eines Pfostens für Attachments oder dergleichen über eine Schraubverbindung aufweist.

Ein derartiges Implantat ist für die Anwendung im Kieferbereich beispielsweise aus der EP 0 216 031 A1 bekannt und hat sich in der Praxis hervorragend bewährt.

Aus der LU-A-59918 ist ein implantables Befestigungsmittel für Prothesen bekannt. Die in den Figuren dargestellte Verankerungseinheit dient zum Festlegen einer Zahnprothese an einem Kieferbein und besteht aus einem mit einem Außengewinde versehenen Bolzen, dessen Gewinde zum Einschrauben in eine in das Kieferbein gebohrte Gewindebohrung zum dauerhaften Implantieren der Verankerungseinheit bestimmt ist. Die Verankerungseinheit ist dabei mit einer Dichtungsvorrichtung versehen, die auf den oberen Außenbund des Gewindebolzens 18 aufgeschoben ist. Der Ring ist unten mit einer ringförmigen Schneide versehen, die dazu dient, abdichtend gegen die Ringschulter einer äußeren Erweiterung der Bohrung anzuliegen, die in das Kieferbein zur Aufnahme des Bolzens gebohrt worden ist. Eine derartigen Vorrichtung ist durch die beschriebene Ausgestaltung nicht geeignet, zur Fixierung auf- oder zwischengelegter Knochenstücke zu dienen. Gleiches trifft für den in Fig. 2 bzw. Fig. 4 dieser Druckschrift dargestellten Aufbau zu, der eine Abstandseinheit betrifft, die erst nach Abschluß des Einheilens eingesetzt werden soll.

Aus der FR-A-2589350 ist ein Implantat mit einer Plasmabeschichtung aus Hydroxylapatit bekannt.

In einigen Fällen ist es jedoch notwendig, vor Einbringen des Grundkörpers in den Knochen, in diesem Bereich vorhandene Knochendefizite, wie beispielsweise Fehlstellen, Risse oder dergleichen, zunächst auszugleichen. Dies erfolgt im allgemeinen dadurch, daß entsprechend bemessene knochenstücke auf oder an vorhandener Knochensubstanz solange fixiert werden, bis diese fest eingewachsen sind. Dabei ist es nachteilig, daß man eine erhebliche Zeit verstreichen lassen muß, ehe man in diesen Bereich erneute knochenchirurgische Manipulationen, z.B. zum Einbringen eines wie oben beschriebenen Grundkörpers, vornimmt, da die frisch eingewachsenen Knochenstücke natürlich noch über einen längeren Zeitraum die Tendenz haben, sich bei Belastung wieder zu losen oder an ihren ehemaligen Anlageflächen zu reißen.

Aufgabe der Erfindung ist es daher, das bekannte Implantat dahingehend weiterzuentwickeln, daß es neben seiner eigentlichen bestimmungsgemäßen Aufgabe gleichzeitig auch zur Fixierung auf- oder zwischengelegter Knochenstücke an vorhandener Knochensubstanz dienen kann.

Erfindungsgemäß wird diese Aufgabe durch die im Kennzeichen von Anspruch 1 genannten Merkmale gelöst.

Mit der erfindungsgemäß vorgesehenen Preßfläche ist es möglich, in vorhandener fester Knochensubstanz Knochenstücke zum Ausgleich von eventuell vorhandenen Defiziten zu fixieren. Dadurch, daß die Preßfläche durch den Überstand des Schraubenkopfes einer in den Grundkörper einschraubbaren Schraube gebildet wird, ist es möglich, einen im wesentlichen üblichen Grundkörper für gattungsgemäße Implantate zu verwenden, in dessen Innengewinde eine entsprechende Schraube eingeschraubt wird, dessen überstehender Schraubenkopf eine entsprechende Fixierung der Knochenstücke ermöglicht. Nach Einwachsen dieser Knochenstücke kann die Schraube aus dem Grundkörper entfernt werden und für seinen bestimmungsgemäßen Zweck, d.h. der Aufnahme eines Implantatpfostens oder dergleichen, eingesetzt werden.

Die erfindungsgemäß vorgesehene Ringausnehmung gewährleistet, daß das Innere des Grundkörpers wirksam gegen die Umgebung abgeschlossen ist. Dies ist überwiegend aus hygienischen Gründen erforderlich, hat aber auch den weiteren Vorteil, daß beim späteren Entfernen der Schraube ein Teil des Grundkörpers freiliegt. Der Grundkörper muß so nicht von eventuell angewachsenem Knochen- oder Gewebematerial befreit werden.

Fixierung der Knochenstücke ermöglicht. Nach Einwachsen dieser Knochenstücke kann dann die Schraube aus dem Grundkörper entfernt werden und für seinen bestimmungsgemäßen Zweck, d.h. der Aufnahme eines Implantatpfostens oder dergleichen, eingesetzt werden.

Durch ein bevorzugt vorgesehenes Gewinde am distalen Ende des Grundkörpers wird es möglich, ein Transplantat, das von dem Grundkörper durchsetzt wird, an vorhandener Knochensubstanz zu fixieren. Der Grundkörper wird dabei sowohl in das Transplantat, als auch in den Knochen, an dem das Transplantat fixiert ist, einwachsen und dadurch zuverlässig verankert.

In einer bevorzugten Ausführung des Gewindes kann dieses nach Art eines Holzschraubengewindes mit großer Tiefe und Steigung versehen sein und der Schaft in einer Spitze auslaufen. Eine solche Ausbildung des Gewindes bietet sich immer dann an, wenn keine besonderen vorbereitenden Maßnahmen im Knochen, z.B. durch Einsetzen einer Hülse mit Gewinde oder Schneiden eines Gewindes direkt ins Kiefermaterial, möglich oder zweckdienlich sind.

In einer weiteren bevorzugten Ausführung wird das Gewinde als ein Trapezgewinde, insbesondere ein symmetrisches Trapezgewinde, ausgeführt. Diese Ausbildung vermeidet die bei einem Spitzgewinde auftretenden scharfen Kanten, und ermöglicht, daß der Grundkörper nach dem Zuggurtungsprinzip eingeschraubt werden kann und anschließend sicher gehalten wird.

Dabei ist es sehr vorteilhaft, wenn das Gewinde tortenstückähnliche Ausfräsungen aufweist die sich über die gesamte oder einen Teil der Länge des Gewindes erstrecken. Sie wirken als Spannut für das selbstschneidende Gewinde.

Vorteilhafterweise werden die Ausfräsungen eine gewölbte Kante und eine gerade Kante in im wesentlichen axialer Richtung besitzen. Die gewölbte und die gerade Kante dabei so verlaufen, daß die gewölbte Kante jeweils die beim Einschrauben nachlaufende ist, während die gerade Kante die beim Einschrauben des Grundkörpers in den Knochen vorlaufende Kante ist.

Dabei wird weiter bevorzugt, daß im Kopf der Schraube ein Schlitz ausgebildet ist, der vor dem Rand des Schraubenkopfes endet, so daß der Grundkörper zusammen mit der mit Preßfläche versehenen Schraube in den Knochen eingedreht werden kann, ohne daß die Gefahr besteht, daß ein entsprechender Schraubendreher bei dieser Manipulation abschrutscht oder Verletzungen verursacht.

Es wird weiter vorgeschlagen, daß der Grundkörper aus Titan gefertigt wird. Dabei ist der Grundkörper bevorzugt mit einer Plasmabeschichtung aus Hydroxylapatit oder dergleichen versehen oder mechanisch und/oder chemisch angerauht. Eine derartige Beschichtung oder Anrauhung hat den Vorteil, daß das Knochengewebe sehr gut an ihr haftet, was das Einwachsen des Grundkörpers im Knochen erleichtert. Da dies in dem Bereich des Grundkörpers, in dem sich dieser in die Ringausnehmung der Schraube einsenkt, nicht unbedingt erwünscht ist, und sogar die Abschlußwirkung behindern würde, ist es vorteilhaft, wenn in diesem Bereich auf eine Beschichtung oder Anrauhung verzichtet wird.

Weitere Merkmale und Vorteile der Erfindung ergeben sich aus nachfolgenden Beschreibung, in der ein Ausführungsbeispiel anhand der Zeichnungen im einzelnen erläutert ist. Dabei zeigt:
- Fig. 1: den gesamten Grundkörper mit einer in ihn eingeschraubten Schraube,
- Fig. 2: eine Seitenansicht des Gewindes mit der Ausfräsung entlang der gewölbten Kante,
- Fig. 3: eine um 90° gedrehten Seitenansicht von Fig. 2 mit der Ausfräsung entlang der geraden Kante,
- Fig. 4: die Schraube zum Verschluß des Grundkörpers an seinem aus dem Kiefer herausragenden Ende in Seitenansicht, und
- Fig. 5: die Schraube aus Fig. 4 in Draufsicht auf ihren Kopf.

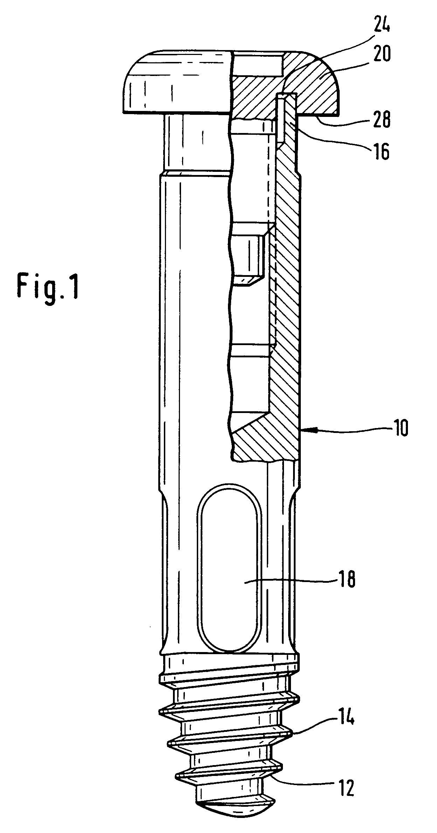

In Fig. 1 ist der Grundkörper 10 in seiner Gesamtheit zusammen mit der Schraube 20 mit ihrer an der Unterseite des Schraubenkopfes vorgesehenen Preßfläche 28 dargestellt. Mit der Preßfläche 28 wird, wie oben beschrieben auf vorhandenem Knochenmaterial auf- oder zwischengelegtes Transplantatmaterial angedrückt und fixiert. Dabei wird das Transplantatmaterial vorzugsweise ebenfalls mit einer Bohrung versehen, die vom Grundkörper 10 durchdrungen wird, um so auch eine Fixierung in seitlicher Richtung zu erhalten.

Am unteren Ende des Grundkörpers 10 ist deutlich das Gewinde 14, mit den zur Spitze des Grundkörpers angestellten Flanken 12 zu erkennen. Das erfindungsgemäße Implantat ist nach dem Zuggurtungsprinzip konstruiert, das sich hier besonders geeignet, da das Implantat so leicht einzuschrauben ist und einen festen Sitz gewährleistet.

Ebenso sind im unteren Bereich des Grundkörpers 10 angeordnete Lakunen 18 zu erkennen, in die beim Einheilen zur besseren Verankerung Knochenmaterial einwachsen kann.

Der obere Rand 16 des Grundkörpers 10 senkt sich in die Ringausnehmung 24 der Schraube 20 ein. Der in dem Schraubenkopf eingesenkte Teil 16 der Grundkörpers wird dadurch, daß die Knochenoberfläche durch die Preßfläche 28 definiert wird, immer aus dem Knochen herausragen, so daß später leicht an diesem Teil Implantatpfosten oder dergleichen befestigt werden können.

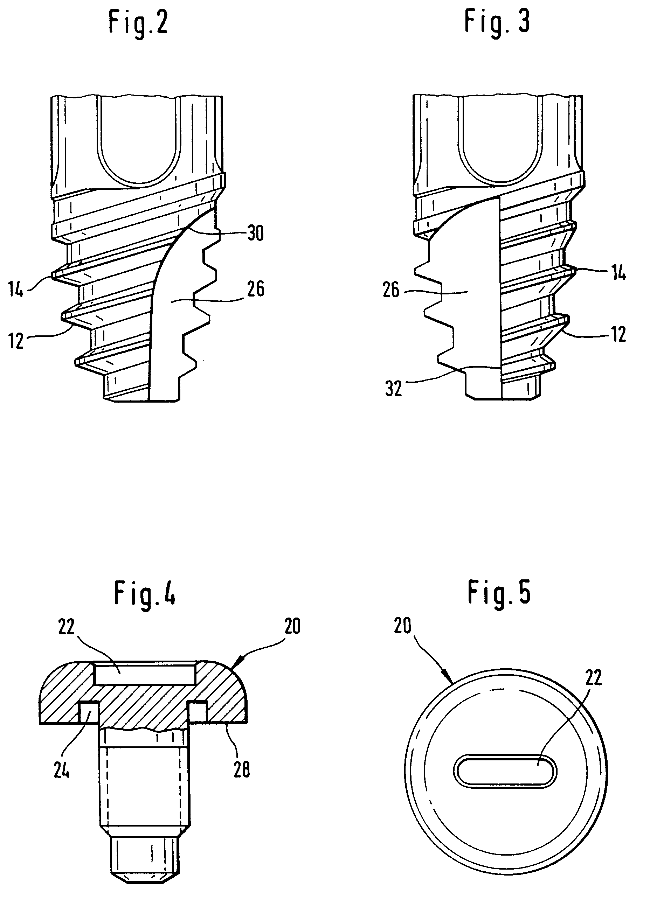

In den Fig. 2 und 3 ist das Gewinde 14 in Ausschnittsdarstellung genauer gezeigt. Hier ist auch die Ausfräsung 26, die eine gerade Kante 32 und eine gewölbte Kante 30 aufweist, dargestellt. Sie dient als Spannut für das selbstschneidende Gewinde. Die gewölbte Kante verläuft beim Einschrauben des Gewindes an der nachlaufenden Seite, die gerade gefräste Kante verläuft an der in Einschraubrichtung voranlaufenden Seite.

Die Schraube 20 zum Verschluß des axial im Grundkörper 10 verlaufenden Innengewindes ist in Fig. 4 in Seitenansicht, sowie teilweise in Schnittansicht dargestellt. Das Gewinde ist aus Vereinfachungsgründen nicht gezeigt. Jedoch sind die Ringausnehmung 24 und der Schlitz 22, der zum Einschrauben des Grundkörpers 10 in den Knochen, aber auch zum Herausschrauben der Schraube 20 nach dem Einwachsen des Grundkörpers 10 dient, gut zu erkennen. Daß der Schlitz 22 vor dem Rand des Schraubenkopfes endet, läßt sich gut in Fig. 5 sehen, die den Kopf der Schraube 20 in Draufsicht zeigt.

## Patentansprüche

1. Implantat mit einem in Knochenmaterial implantierbaren Grundkörper, der ein Innengewinde zur Aufnahme eines Implantatpfostens, einer Implantatextension, eines Pfostens für Attachments, einer Schraube während eines Heilungsprozesses des Knochenmaterials oder dergleichen über eine Schraubenverbindung aufweist,
dadurch gekennzeichnet, daß
durch den Überstand des Schraubenkopfes einer in das Innengewinde des Grundkörpers (10) einschraubbaren Schraube (20) eine sich im wesentlichen quer zur Achse des Grundkörpers (10) verlaufende, sich über dessen Querschnittsfläche hinauserstreckende Preßfläche (28), durch die ein zusätzlich eingefügtes Knochenstück fixierbar ist, gebildet ist, und
der Schraubenkopf der Schraube (20) zwischen der Preßfläche (28) und dem Außengewinde der Schraube (20) eine Ringausnehmung (24) zur Aufnahme des okklusalen Randes des Grundkörpers (10) aufweist.

2. Implantat nach Anspruch 1, gekennzeichnet durch ein Gewinde (14) am distalen Ende des Grundkörpers (10).

3. Implantat nach einem der vorangehenden Ansprüche, dadurch gekennzeichnet, daß das Gewinde (14) nach Art eines Holzschraubengewindes mit großer Tiefe und Steigung versehen ist und der Schaft des Gewindes (14) in einer Spitze ausläuft.

4. Implantat nach einem der vorangehenden Ansprüche, dadurch gekennzeichnet, daß das Gewinde (14) ein Trapezgewinde, insbesondere ein symmetrisches Trapezgewinde, ist.

5. Implantat nach einem der vorangehenden Ansprüche, dadurch gekennzeichnet, daß das Gewinde (14) mindestens eine tortenstückähnliche Ausfräsung (26) aufweist, die sich über die gesamte Länge oder einen Teil der Länge des Gewindes (14) erstreckt.

6. Implantat nach Anspruch 5, dadurch gekennzeichnet, daß die Ausfräsung (26) eine gewölbte Kante (30) und eine gerade Kante (32) in im wesentlichen axialer Richtung aufweist.

7. Implantat nach einem der vorangehenden Ansprüche, dadurch gekennzeichnet, daß am Kopf der Schraube (20) ein Schlitz (22) ausgebildet ist, der vor dem Rand des Schraubenkopfes endet.

8. Implantat nach einem der vorangehenden Ansprüche, dadurch gekennzeichnet, daß der Grundkörper (10) aus Titan gefertigt ist.

9. Implantat nach einem der vorangehenden Ansprüche, dadurch gekennzeichnet, daß der Grundkörper (10) mit Ausnahme des Bereiches, in dem sich dieser in die Ringausnehmung (24) des Schraubenkopfes einsenkt, mit einer Plasmabeschichtung aus Hydroxylapatit oder dergleichen versehen ist.

10. Implantat nach einem der Ansprüche 1 bis 8, dadurch gekennzeichnet, daß der Grundkörper (10) mit Ausnahme des Bereiches, in dem dieser in die Ringausnehmung (24) des Schraubenkopfes einsenkt, mechanisch und/oder chemisch angerauht ist.

## Claims

1. An implant having a base member which is adapted to be implanted in bone material and which comprises an inside screwthread to receive an implant post, an implant extension, a post for attachments, a screw during a healing process of the bone material, or the like, by way of a screw connection, characterised in that a pressure surface (28) which extends substantially transversely of the axis of the base member (10) and across its cross-sectional area, and by means of which an additionally inserted piece of bone is fixable, is formed by the projection of the screwhead of a screw (20) adapted to be screwed into the internal screwthread of the base member (10), and the screwhead of the screw (20) has, between the pressure surface (28) and the external screwthread of the screw (20), an annular recess (24) to receive the occlusal edge of the base member (10).

2. An implant according to claim 1, characterised by a screwthread (14) at the distal end of the base member (10).

3. An implant according to any one of the preceding claims, characterised in that the screwthread (14) is provided with a large depth and pitch after the style of a woodscrew thread and the shank of the screwthread (14) terminates in a point.

4. An implant according to any one of the preceding claims, characterised in that the screwthread (14) is a trapezoidal thread, more particularly a symmetrical trapezoidal thread.

5. An implant according to any one of the preceding claims, characterised in that the screwthread (14) has at least one recess (26) after the style of a piece of cake, which extends over the entire length or part of the length of the screwthread (14).

6. An implant according to claim 5, characterised in that the recess (26) has a curved edge (30) and a straight edge (32) in a substantially axial direction.

7. An implant according to any one of the preceding claims, characterised in that a slot (22) is formed at the head of the screw (20) and terminates before the edge of the screwhead.

8. An implant according to any one of the preceding claims, characterised in that the base member (10) is made from titanium.

9. An implant according to any one of the preceding claims, characterised in that the base member (10) is provided with a plasma coating of hydroxyl apatite or the like except for the region in which it is countersunk into the annular recess (24) of the screwhead.

10. An implant according to any one of claims 1 to 8, characterised in that the base member (10) is mechanically and/or chemically roughened except for the region in which it is countersunk into the annular recess (24) of the screwhead.

## Revendications

1. Implant comprenant un corps de base qui peut être implanté dans le tissu osseux et qui comporte un filetage intérieur pour recevoir un pilier d'implant, une extension d'implant, un pilier pour des moyens adaptables, une vis lors du processus de cicatrisation du tissu osseux ou analogue par l'intermédiaire d'une liaison vissée, caractérisé en ce que la partie en projection de la tête d'une vis (20) pouvant être vissée dans le filetage intérieur du corps de base (10) forme une surface de pression (28) qui s'étend sensiblement transversalement à l'axe du corps de base (10) et au-delà de la section de celui-ci et qui permet d'immobiliser un morceau d'os rapporté, et la tête de la vis (20) comporte, entre la surface de pression (28) et le filetage extérieur de la vis (20), un évidement annulaire (24) pour recevoir le bord occlusal du corps de base (10).

2. Implant selon la revendication 1, caractérisé par un filetage (14) situé à l'extrémité distale du corps de base (10).

3. Implant selon l'une des revendications précédentes, caractérisé en ce que le filetage (14) présente, à la manière d'un filetage de vis à bois, une profondeur et un pas importants, et le fût du filetage (14) se termine en pointe.

4. Implant selon l'une des revendications précédentes, caractérisé en ce que le filetage (14) est un filetage trapézoïdal, en particulier un filetage trapézoïdal symétrique.

5. Implant selon l'une des revendications précédentes, caractérisé en ce que le filetage (14) comporte au moins une fraisure en forme de part de tarte (26) qui s'étend sur toute la longueur ou sur une partie de la longueur du filetage (14).

6. Implant selon la revendication 5, caractérisé en ce que la fraisure (26) présente un bord bombé (30) et un bord rectiligne (32) dans le sens sensiblement axial.

7. Implant selon l'une des revendications précédentes, caractérisé en ce que sur la tête de la vis (20) est réalisée une fente (22) qui se termine avant le bord de la tête de la vis.

8. Implant selon l'une des revendications précédentes, caractérisé en ce que le corps de base (10) est fabriqué en titane.

9. Implant selon l'une des revendications précédentes, caractérisé en ce que le corps de base (10), à l'exception de la zone où il pénètre dans l'évidement annulaire (24) de la tête de la vis, est revêtu d'un placage au plasma en hydroxyapatite ou analogue.

10. Implant selon l'une des revendications 1 à 8, caractérisé en ce que le corps de base (10), à l'exception de la zone où il pénètre dans l'évidement annulaire (24) de la tête de la vis, est rendu rugueux par voie mécanique et/ou chimique.
